# EUROPÄISCHE PATENTANMELDUNG

(11) **EP 2 339 375 A2**
(43) Veröffentlichungstag der Anmeldung: **29.06.2011**
(21) Anmeldenummer: 10015294.1
(22) Anmeldetag: 04.12.2010
(51) Int. Cl.: G01S 17/87, G01S 17/93, G01S 13/42, G01S 13/72, G01S 13/87, G01S 13/93, G01S 15/42, G01S 15/87, G01S 17/42, G01S 15/93

(54) **Verfahren zum Unterstützen beim Führen eines Kraftfahrzeugs**

(30) Priorität: 16.12.2009 DE 102009058488
(71) Anmelder: Audi AG, 85045 Ingolstadt (DE)
(72) Erfinder: Bouzouraa, Mohamed Essayed, 85049 Ingolstadt (DE); Hofmann, Ulrich, Dr., 85049 Ingolstadt (DE)
(74) Vertreter: Thielmann, Frank

(57) **Zusammenfassung**

Durch Umfeldsensoren (12a, 12b, 12c) eines Kraftfahrzeugs (10) wird zu Punkten (22a, 22b, 22c, 22d) im Umgebungsraum des Kraftfahrzeugs (10) jeweils ermittelt, ob oder ob nicht der jeweilige Punkt von einem Gegenstand belegt ist. Diejenigen Punkte, zu denen ermittelt wurde, dass sie von keinem Gegenstand belegt sind, werden zusammengefasst, und es wird ein sog. Freiraum-Objekt aufgrund eines Objektmodells zugeordnet. Das Freiraum-Objekt ist nach dem Vorbild von herkömmlichen, durch Bildverarbeitung erkannten gegenständlichen Objekten definiert, betrifft jedoch gerade nicht gegenständliche Objekte, sondern den Raum, der von solchen Objekten frei ist. Durch die Umkehrung bisheriger Prinzipien kann die Führung eines Kraftfahrzeugs erleichtert werden, insbesondere in komplexen Straßensituationen.

## Beschreibung

### BESCHREIBUNG:

Die Erfindung betrifft ein Verfahren zum Unterstützen des Fahrzeugführers beim Führen eines Kraftfahrzeugs, wobei das Verfahren während einer Fahrt des Kraftfahrzeugs durchgeführt wird.

Die Erfindung betrifft somit allgemein das Gebiet der Fahrerassistenz. Fahrerassistenzsysteme gewinnen Informationen, in der Regel mit Hilfe von Sensoren, und beeinflussen dann in Abhängigkeit von den gewonnenen Informationen den Zustand des Kraftfahrzeugs. Vorliegend steht im Zentrum des Interesses, dass Informationen über das Umfeld des Kraftfahrzeugs gewonnen werden, also den Umgebungsraum. Solche Informationen werden beispielsweise von Spurführungssystemen oder Abstandsregelsystemen genutzt. Bisher wird mit einem Umfeldsensor, z. B. gemäß der in der DE 10 2007 004 973 A1 beschriebenen Art, ermittelt, wo in der Umgebung des Kraftfahrzeugs sich ein Hindernis befindet, und durch Eingriffe in den Betrieb des Kraftfahrzeugs wird gewährleistet, dass das Kraftfahrzeug nicht gegen das Hindernis stößt, sondern in der Regel in einem Mindestabstand zu diesem verbleibt. Bei einer Weiterführung werden Bilder der Umgebung gewonnen, z. B. mit Hilfe von Ultraschall oder durch einen Laserscanner. Dadurch wird es möglich, Methoden der Signalverarbeitung anzuwenden. Insbesondere kann eine Information über die Natur des Hindernisses gewonnen werden. Die DE 101 48 071 A1 beschreibt ein Verfahren zur Erkennung und Verfolgung von Objekten aufgrund solcher geschwindigkeits- oder tief aufgelöster Bilder von Gegenständen in einem Sichtbereich eines in einem Fahrzeug angeordneten Sensors. Die Objekte werden hierbei Objektklassen zugeteilt, die wenigstens eine Eigenschaft solcher Objekte betreffen, die aus den Bildern bestimmbar ist. Durch die Objektklassen können beispielsweise unterschiedliche Arten von anderen Fahrzeugen unterschieden werden. Eingriffe können davon abhängig gemacht werden, ob als Hindernis ein Personenkraftwagen oder ein Lastwagen vorausfährt.

Die sog. Verfolgung der Objekte beinhaltet, dass Voraussagen über deren zukünftigen Standort gemacht werden. Die DE 10 2006 057 276 A1 befasst sich mit diesem Thema ausführlich. Im Rahmen der DE 101 48 071 A1 kann eine Verfolgung durch die Einteilung in Objektklassen erleichtert sein, weil sich z. B. auf einer Autobahn Personenkraftwagen mit höherer Geschwindigkeit bewegen können als Lastkraftwagen o. ä.

In komplexen Straßensituationen gelangen die bisherigen Verfahren jedoch an ihre Grenzen. Wenn das Kraftfahrzeug beispielsweise durch ein enges Sträßchen mit zahlreichen am Straßenrand geparkten anderen Kraftfahrzeugen und sonstigen stehenden Hindernissen fährt und hierbei sowohl Autos vor ihm fahren als auch Gegenverkehr besteht, kann nicht jedes Objekt in die Berechnung einbezogen werden. Gleiches gilt auf mehrspurigen, dicht befahrenen Autobahnen.

Es ist Aufgabe der Erfindung, ein Verfahren zum Unterstützen beim Führen eines Kraftfahrzeugs während einer Fahrt desselben bereitzustellen, das komplexeren Straßensituationen besser Rechnung trägt als die bisherigen Verfahren.

Die Aufgabe wird durch ein Verfahren mit den Merkmalen gemäß Patentanspruch 1 gelöst.

Zu dem erfindungsgemäßen Verfahren gehört zum Einen, dass durch zumindest einen Sensor des Kraftfahrzeugs zu Punkten im Umgebungsraum des Kraftfahrzeugs jeweils die Information gewonnen wird, ob oder ob nicht der jeweilige Punkt von einem Gegenstand belegt (eingenommen) ist, und auch, wie sich die Belegung zeitlich ändert. Es wird somit davon abgegangen, lediglich die Orte von Hindernissen zu bestimmen, sondern es werden insbesondere auch diejenigen Punkte im Raum bestimmt, die nicht von einem Hindernis bzw. Gegenstand belegt sind. Die Erfindung knüpft insoweit an Techniken aus der Robotik an, in denen das Umfeld des Roboters durch ein Belegungsgitter wiedergegeben wird. Einzelnen Zellen des Gitters wird eine Wahrscheinlichkeit zugeordnet, ob dort ein Hindernis befindlich ist oder, ob diese Zelle frei ist. Insoweit, als vorliegend lediglich von Punkten statt von Zellen gesprochen wird, wird ein jeweiliger Punkt als Repräsentation einer Zelle angesehen.

Nachdem bei dem erfindungsgemäßen Verfahren nun die Belegung bzw. Nichtbelegung zu einer Vielzahl von Punkten ermittelt wurde, wird ein Vergleich mit einem Objektmodell durchgeführt und aufgrund eines solchen Vergleichs einer Gesamtheit von Punkten, die nicht von einem Gegenstand belegt sind, ein Freiraum-Objekt zugeordnet. Diesem wird zudem aufgrund der Information über die zeitliche Änderung der Belegung zumindest ein Zustandsvektor zugeordnet. Bei der Erfindung wird somit genau anders herum vorgegangen als beim Stand der Technik: Ein Objekt wird nicht den Punkten zugeordnet, die mit einem Gegenstand belegt sind, sondern gerade Punkten, die nicht von einem Gegenstand belegt sind. Die Erfindung führt insofern die Idee ein, den Freiraum als Objekt zu behandeln. Aufgrund der Informationen in dem zumindest einen Zustandsvektor kann dann auf die Bewegung dieses Freiraum-Objekts (im räumlichen Bezugssystem, in dem die Punkte definiert sind) und/oder die Entwicklung seiner Form geschlossen werden. Diese Informationen werden dann dazu genutzt, Festlegungen zu machen, was das Fahrerassistenzsystem tut: In Abhängigkeit von gegenwärtigen und/oder durch Schließen ermittelten zukünftigen Eigenschaften des Freiraum-Objekts werden Steuerbefehle an zumindest einen Aktor abgegeben, sodass mittels des Aktors ein Eingriff zum Zwecke der Führung des Kraftfahrzeuges bei seiner Fahrt vorgenommen wird. Die Erfindung löst sich somit davon, gegenständliche Objekte zu definieren und bei deren Vorkommen im Umgebungsraum des Kraftfahrzeugs zu erkennen und zu verfolgen, um Ausgabebefehle an die Aktoren des Kraftfahrzeugs zu geben. Stattdessen wird ein Freiraum-Objekt verwendet, also eine abstrakte Idee von bestehendem freiem Raum, um solche Steuerbefehle zu definieren, wobei bevorzugt auf die Definition von gegenständlichen Objekten gänzlich verzichtet wird und ausschließlich das Freiraum-Objekt definiert wird.

Alternativ wird zum Ansteuern eines Aktors kann auch eine Einrichtung zum Abgeben einer Meldung an den Fahrzeugführer angesteuert werden, also insbesondere eine Anzeigevorrichtung oder eine akustische Ausgabeeinheit. Klassischerweise wird man dem Fahrer bei der Führung des Kraftfahrzeuges optisch oder akustisch dadurch warnen (gegebenenfalls auch haptisch oder olfaktorisch), wenn die Straßensituation kritisch ist, insbesondere zu wenig Freiraum zur Verfügung steht.

Die Definition eines Freiraum-Objekts hat zum Einen den Vorteil, dass bei der Zuordnung dieses Freiraum-Objekts tatsächlich solche Punkte außer Acht gelassen werden können, die von einem Gegenstand belegt sind, ungeachtet dieses Gegenstands. Bei der Erkennung von gegenständlichen Objekten hingegen kann es sein, dass es wegen der Vielzahl solcher gegenständlicher Objekte einige belegte Raumpunkte gibt, denen kein Objekt zugeordnet wird. Wird dann das Kraftfahrzeug so gesteuert, dass es sich ausschließlich an den erkannten Objekten orientiert, kann es mit einem nicht erkannten Gegenstand kollidieren. Dies wird durch das vorliegende Verfahren vermieden. Das vorliegende Verfahren hat auch den Vorteil, dass der Freiraum in einer gewissen Beliebigkeit an Formgebungen definiert sein kann. ln einem einfachen Beispiel ist das Freiraum-Objekt rechteckig. Um die zeitliche Entwicklung dieses Freiraums zu beschreiben, wird vorliegend ein einziges Freiraum-Objekt benutzt. Hingegen würden bei bisherigen Methoden die den Freiraum begrenzenden Objekte verfolgt. Bei einem rechteckigen Freiraum sind dies neben dem eigenen Kraftfahrzeug möglicherweise drei weitere Objekte (z. B. die beiden Wände eines Straßentunnels und die Rückseite eines davor fahrenden Fahrzeugs oder in einer Autobahnsituation anstelle der Tunnelwände die Seitenwände von auf benachbarten Spuren fahrenden Fahrzeugen). Somit wird durch die Einführung des Konzepts eines Freiraum-Objekts eine wesentliche Vereinfachung bei der Modellierung erzielt, sodass das Fahrerassistenzsystem auch in komplexeren Straßensituationen zuverlässig arbeiten kann.

In an sich bekannter Weise kann der zumindest eine Aktor einen Eingriff vornehmen, durch den das Fahrzeug gelenkt und/oder beschleunigt und/oder gebremst wird. Es handelt sich somit um eine automatische Längs- und Querführung des Fahrzeugs mit einem Eingriff am Lenkrad, bei der Zuführung von Kraftstoff (Gaspedal) oder in der Bremsanlage.

Die Definition eines Freiraum-Objekts gewinnt dann besonderen Sinn, wenn durch den Eingriff (insbesondere im Vergleich zur Situation ohne den Eingriff) gewährleistet wird, dass das Fahrzeug in ein früheres Freiraum-Objekt eintritt, mit anderen Worten sich dahin bewegt, wo vorher kein Gegenstand war.

Da die gesamte Informationsverarbeitung in dem Kraftfahrzeug selbst erfolgt, bietet es sich aus Gründen der Einfachheit der Datenverarbeitung an, die Punkte im Umgebungsraum in einem an das Kraftfahrzeug gekoppelten Koordinatensystem zu beschreiben, z. B. ist der Ursprung des Koordinatensystems dauerhaft an dieselbe Stelle des Kraftfahrzeugs gelegt. Insofern, als von einer Bewegung des Freiraum-Objekts gesprochen wird, kann dies dann nur aus Sichtweise des Kraftfahrzeugs gelten. Fährt ein Kraftfahrzeug z. B. mit gleichmäßigem Abstand hinter einem anderen Kraftfahrzeug her, so bewegt sich aus Sicht des hinteren Kraftfahrzeugs der Freiraum zu dem anderen Kraftfahrzeug nicht. Bewegt sich ein Kraftfahrzeug auf ein Hindernis zu, so verkleinert sich der Freiraum, seine Grenze bewegt sich auf das Kraftfahrzeug zu. Eine solche Sichtweise ist sinnvoll, weil ja z. B. Mindestabstandskriterien aus Sicht des Kraftfahrzeugs eingehalten werden müssen.

Grundsätzlich kann ein Sensor - wie z. B. ein Laserscanner, eine Ultraschallquelle, o. ä. - verwendet werden, der Informationen über den gesamten dreidimensionalen Umgebungsraum des Kraftfahrzeugs gewinnt. Bevorzugt wird jedoch das Konzept eines zweidimensionalen Umgebungsraums verwendet, wobei bevorzugt alle Punkte, zu denen eine Messung erfolgt, in einer Ebene liegen. Sinnvoll ist es, wenn es die Ebene der Straße ist, auf der sich das Kraftfahrzeug bewegt, wenn also mit anderen Worten das Kraftfahrzeug selbst auf dieser Ebene steht. Es wird hierbei von dem Regelfall ausgegangen, dass Hindernisse grundsätzlich auf dem Untergrund stehen und nicht von irgendwoher herabhängen. ln weiterer Ausgestaltung der Erfindung können jedoch auch nicht auf dem Boden definierte Freiraum-Objekte verwendet werden, z.B. um in einem Parkhaus zu prüfen, ob der Freiraum nach oben ausreichend groß ist.

Bevorzugt wird die Information in einer gewissen Vollständigkeit gewonnen, nämlich zu jedem Punkt eines in den Umgebungsraum gelegten Gitters (bzw. zu jeder Zelle, deren Mittelpunkt ein solcher Punkt ist). Wie schon erwähnt, ist die Verwendung eines solchen Belegungsgitters aus der Robotik wohl bekannt und wird dort mit Erfolg eingesetzt. Im vorliegenden Fall wird durch die Verwendung eines Belegungsgitters gewährleistet, dass nicht aufgrund unzureichender Messung Gegenstände übersehen werden.

Bevorzugt bildet die jeweils ein Freiraum-Objekt definierende Gesamtheit von Punkten einen geschlossenen Teilraum, wobei hierbei das Konzept der "Geschlossenheit" im Sinne der Mathematik verwendet wird (Gegenteil: offen). Vorliegend lässt sich vereinfachend sagen, dass in dem geschlossenen Teilraum keine Punkte enthalten sein sollen, die von einem Gegenstand belegt sind, wobei der geschlossene Teilraum durch eine Kontur abgrenzbar ist, z. B. im Falle der Verwendung eines zweidimensionalen Umgebungsraums durch eine geschlossene Fläche beschreibbar ist. Durch die Definition eines derartigen Freiraum-Objekts wird unmittelbar an die Definition gegenständlicher Objekte angeknüpft, und es kann die Erfahrung mit der Verarbeitung derartiger Informationen genutzt werden.

Bevorzugt wird mit Hilfe einer möglichst großen Menge an Punkten gemeinsam ein Freiraum-Objekt definiert. Dies ist deswegen vorteilhaft, weil dann erst bei der Verarbeitung der Information über das Freiraum-Objekt entschieden werden muss, ob und in welcher Weise das Kraftfahrzeug sich in den bisherigen Freiraum bewegen soll. Es wird somit nicht schon bei der Definition des Freiraum-Objekts bereits eine Vorauswahl getroffen.

Bevorzugt beschreibt das zur Definition des Freiraum-Objekts verwendete Objektmodell mögliche Formen von Freiraum-Objekten. Solche möglichen Formen von Freiraum-Objekten entsprechen möglichen Straßensituationen, sodass auch komplexen Straßensituationen Rechnung getragen werden kann. Durch die Orientierung an Formen derartiger Freiraum-Objekte kann auch an die Erfahrung mit gegenständlichen Objekten angeknüpft werden.

Nachfolgend wird eine bevorzugte Ausführungsform der Erfindung unter Bezug auf die Zeichnung beschrieben, in der
- Fig. 1: schematisch ein Kraftfahrzeug in der Draufsicht veranschaulicht, in dem das erfindungsgemäße Verfahren durchführbar ist,
- Fig. 2: anhand einer Straßensituation das Konzept eines Freiraum-Objekts veranschaulicht und
- Fig. 3: ein Flussschaubild ist, anhand dessen eine Ausführungsform des er- findungsgemäßen Verfahrens beschrieben wird.

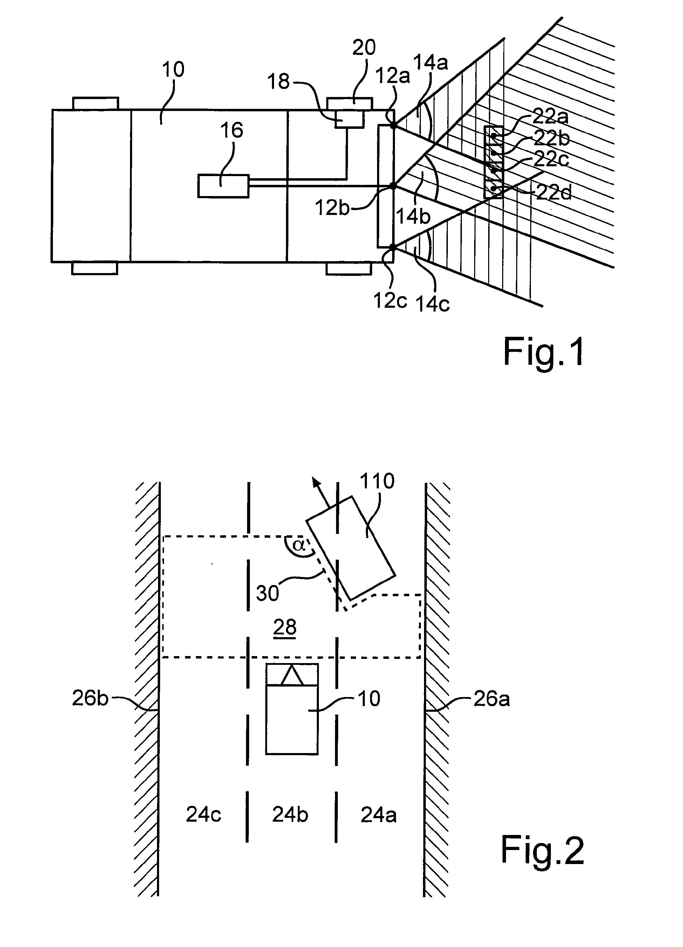

Ein in Fig. 1 gezeigtes Kraftfahrzeug 10 weist Sensoren 12a, 12b und 12c auf, die z. B. als Laserscanner, Radarsensor, Ultraschallsensor oder als Kamera ausgebildet sind und Winkelbereiche 14a, 14b, 14c abtasten. Die Messergebnisse der Sensoren 12a, 12b und 12c werden einem elektronischen Steuergerät 16 zugeführt, und dieses gibt Steuerbefehle an Aktoren 18 aus, die unmittelbar auf den Fahrzustand einwirken. Ein beispielhafter Aktor bremst z. B. ein oder mehrere Räder ab, siehe Rad 20 des Kraftfahrzeugs 10.

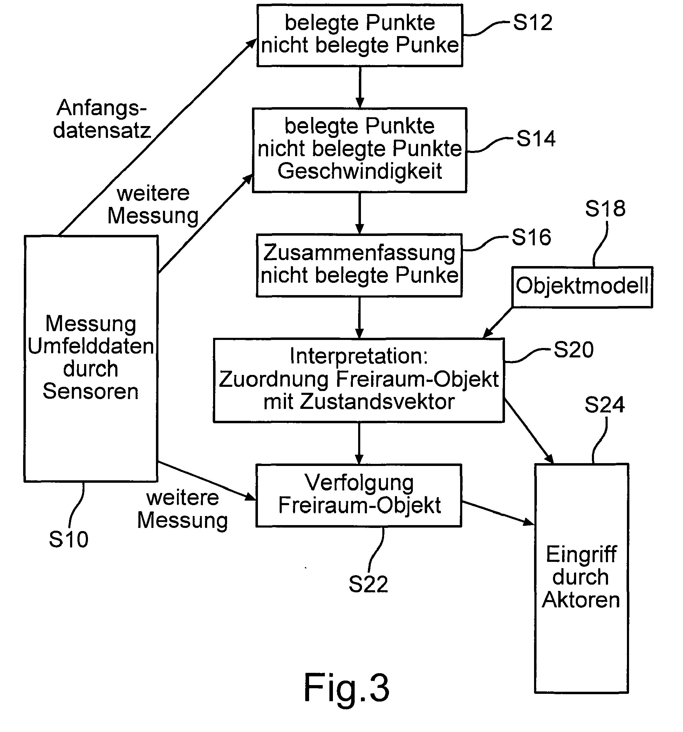

Die Erfindung vollzieht sich ausgehend von der Gewinnung der Messergebnisse der Sensoren 12a, 12b, 12c, über ihre Übermittlung zum Steuergerät 16, über die Umsetzung der Daten im Steuergerät 16 und über das Ausgeben eines Steuerbefehls an den Aktor 18. lm Einzelnen wird dies anhand des Flussschaubilds in Fig. 3 dargestellt:
Die Sensoren 12a, 12b und 12c messen gemäß S10 ständig Umfelddaten. Ein anfänglicher Datensatz wird dem Steuergerät 16 zugeführt, und dort wird aufgrund von Auswertung der Messwerte, z. B. Signalverarbeitung anhand der von den Laserscannern gewonnenen Bilder in Schritt S12, ermittelt, ob Punkte 22a, 22b, 22c, 22d im Raum von einem Gegenstand belegt sind oder nicht. Verfolgung umfasst Prädiktion (Vorhersage) des Zustandsvektors des Freiraum-Objekts für einen späteren Zeitpunkt, Aktualisierung durch neue Messungen und Freiraum-Objekt-Verwaltung.

Durch eine weitere Messung lässt sich während der Fahrt des Kraftfahrzeugs 10 ermitteln, welche Geschwindigkeit die Belegung relativ zu dem Kraftfahrzeug hat, z. B. ob das Belegtsein eines weit beabstandeten Punktes zur Folge hat, dass anschließend ein etwas näher beabstandeter Punkt und weiter anschließend ein noch näher beabstandeter Punkt belegt sind.

In Schritt S14 steht somit die Information über belegte und nicht belegte Punkte sowie über eine Geschwindigkeit zur Verfügung.

Nachfolgend wird die Gesamtheit der nicht belegten Punkte in Schritt S16 zusammengefasst. Nun wird mit einem gemäß S18 bereitgestellten Objektmodell gearbeitet. In dem Objektmodell sind mögliche Formen eines Freiraum-Objekts abgelegt. Die Zusammenfassung der nicht belegten Punkte wird nun einem Schritt der Interpretation unterworfen, S20: Der Gesamtheit der nicht belegten Punkte wird ein bestimmtes Freiraum-Objekt zugeordnet, und unter Verwendung der Information über die Geschwindigkeit ein Zustandsvektor definiert. Nun lässt sich mit Hilfe des Zustandsvektors, gegebenenfalls ergänzt durch eine weitere Messung, in Schritt S22 verfolgen, wie sich das Freiraum-Objekt weiter entwickelt, ob es sich also im Raum bewegt oder nicht. Verfolgung umfasst Pädiktion (Vorhersage) des Zustandsvektors des Freiraum-Objekts für einen späteren Zeitpunkt, Aktualisierung durch neue Messungen und Freiraum-Objekt-Verwaltung.

Ein Beispiel für ein solches Freiraum-Objekt ist in Fig. 2 gezeigt: Vor dem eigenen Fahrzeug 10 bewegt sich ein weiteres Fahrzeug 110, und zwar von einer Fahrspur 24a in eine Fahrspur 24b, auf der sich das eigene Fahrzeug bewegt. Eine weitere Fahrspur 24c bleibt frei, und alle drei Fahrspuren 24a bis 24c sind durch Wände 26a und 26b begrenzt, z. B. durch Lärmschutzwände oder Tunnelwände. Die Sensoren 12a, 12b, 12c haben nun eine Fläche 28 vor dem Kraftfahrzeug 10 ermittelt, der von Gegenständen frei ist. Diese Fläche 28 wird gemäß dem Objektmodell in Schritt S18 so interpretiert, dass wegen des Vorhandenseins einer schräg verlaufenden Linie 30 (Winkel *α* > 90°) mit einem auf die eigene Fahrspur 24b abbiegenden Fahrzeug 110 zu rechnen ist. Für diese Art von Freiraum gibt es ein bestimmtes Freiraum-Objekt, dessen zeitliche Entwicklung durch das Objektmodell auch wiedergegeben werden kann, sodass die Verfolgung des Freiraum-Objekts gemäß Schritt S22 ermöglicht ist. Anhand der Form des Freiraums 28 und der zeitlichen Entwicklung kann vorliegend z. B. in dem Kraftfahrzeug 10 durch das Steuergerät 16 erkannt werden, dass der Freiraum zu klein werden wird, und es kann ein Bremsvorgang eingeleitet werden. Gegebenenfalls kann auch ein Lenkvorgang eingeleitet werden, durch den das Kraftfahrzeug 10 auf die freie Fahrspur 24c gelenkt wird, wobei das System wegen der Form des Freiraum-Objekts erkennt, dass die Wand 26b vorgegeben ist, sodass das Kraftfahrzeug 10 von der Wand 26b fern bleibt.

In Schritt S24 erfolgen somit Eingriffe durch die Aktoren.

ln der in Fig. 2 gezeigten Fahrsituation würden herkömmliche Methoden lediglich das Kraftfahrzeug 110 erkennen und zu diesem gegebenenfalls einen Abstand einhalten. Der Abstand wäre vorliegend aber nicht leicht zu definieren, weil sich das Heck des Kraftfahrzeugs 110 noch nicht unmittelbar vor dem Kraftfahrzeug 10 befindet. Bei der Modellierung des Freiraum-Objekts kann aber bereits ein abbiegendes Kraftfahrzeug 110 berücksichtigt werden und anhand der schräg verlaufenden Konturlinie 30 erkannt werden.

Das Freiraum-Objekt 28 berücksichtigt außerdem insgesamt das Vorhandensein dreier gegenständlicher Objekte, nämlich des Kraftfahrzeugs 110 und der beiden Seitenwände 26a und 26b. Somit kann durch die Verwendung eines einzigen Objekts, nämlich des Freiraum-Objekts eine sichere Führung des Kraftfahrzeugs 10 erfolgen. Das Kraftfahrzeug 110 und die Wände 26a und 26b müssen insbesondere nicht einzeln modelliert werden.

## Patentansprüche

1. Verfahren zum Unterstützen beim Führen eines Kraftfahrzeugs während einer Fahrt desselben, bei dem durch zumindest einen Sensor (12a, 12b, 12c) des Kraftfahrzeugs zu Punkten (22a, 22b, 22c, 22d) im Umgebungsraum des Kraftfahrzeugs (10) die Information gewonnen wird, ob oder ob nicht der jeweilige Punkt (22a, 22b, 22c, 22d) von einem Gegenstand belegt ist, und wie sich die Belegung zeitlich ändert, wobei aufgrund des Vergleichs mit einem Objektmodell einer Gesamtheit von Punkten, die nicht von einem Gegenstand belegt sind, ein Freiraum-Objekt (28) zugeordnet wird, dem aufgrund der Information über die zeitliche Änderung der Belegung zumindest ein Zustandsvektor zugeordnet wird, wobei nachfolgend aufgrund des zumindest einen Zustandsvektors auf eine Bewegung des Freiraumobjekts und/oder die Entwicklung seiner Form geschlossen wird und in Abhängigkeit von gegenwärtigen und/oder durch Schließen ermittelten zukünftigen Eigenschaften des Freiraum-Objekts Steuerbefehle an zumindest einen Aktor (18) abgegeben werden, sodass ein Eingriff zum Zweck der Führung des Kraftfahrzeug bei einer Fahrt vorgenommen wird, oder Steuerbefehle an eine Warneinrichtung abgegeben werden.

2. Verfahren nach Anspruch 1, bei dem der zumindest eine Aktor (18) einen Eingriff vornimmt, durch den das Kraftfahrzeug (10) gelenkt und/oder beschleunigt und/oder gebremst wird.

3. Verfahren nach Anspruch 1 oder 2, bei dem durch den Eingriff gewährleistet wird, dass das Fahrzeug in einen früheres Freiraum-Objekt eintritt.

4. Verfahren nach Anspruch 1, bei dem die Punkte (22a, 22b, 22c, 22d) im Umgebungsraum in einem an das Kraftfahrzeug gekoppelten Koordinatensystem beschrieben werden.

5. Verfahren nach Anspruch 4 bei dem alle Punkte, zu denen eine Messung erfolgt, in einer Ebene liegen.

6. Verfahren nach einem der vorhergehenden Ansprüche, bei dem die Information zu jedem Punkt (22a, 22b, 22c, 22d) eines in den Umgebungsraum gelegten Gitters gewonnen wird.

7. Verfahren nach einem der vorhergehenden Ansprüche, bei dem die jeweils ein Freiraumobjekt definierende Gesamtheit von Punkten einen geschlossenen Teilraum bildet.

8. Verfahren nach einem der vorhergehenden Ansprüche, bei dem mit einer möglichst großen Menge an Punkten, zu denen Informationen gewonnen wurde, gemeinsam ein Freiraum-Objekt (28) definiert wird.

9. Verfahren nach einem der vorhergehenden Ansprüche, bei dem das Objektmodell mögliche Formen von Freiraumobjekten beschreibt.
